# EUROPEAN PATENT APPLICATION

(11) **EP 4 564 533 A1**
(43) Date of publication of application: **04.06.2025**
(21) Application number: 23845069.6
(22) Date of filing: 01.06.2023
(51) Int. Cl.: H01M 10/6557, H01M 10/6568, H01M 10/613

(54) **BATTERY COOLING STRUCTURE, BATTERY PACK AND ELECTRIC VEHICLE**

(30) Priority: 27.07.2022 CN 202210892365
(71) Applicant: Microvast Power Systems Co., Ltd., Huzhou, Zhejiang 313000 (CN)
(72) Inventor: LI, Bin, Huzhou, Zhejiang 313000 (CN); QIU, Xiaoge, Huzhou, Zhejiang 313000 (CN); GAO, Qiuming, Huzhou, Zhejiang 313000 (CN); XIAO, Ningqiang, Huzhou, Zhejiang 313000 (CN)
(74) Representative: Zaboliene, Reda
(86) International application number: PCT/CN2023/097772
(87) International publication number: WO 2024/021856

(57) **Abstract**

Provided in the present application is a battery cooling structure, comprising a cooling plate assembly and battery modules. The cooling plate assembly comprises a horizontally-arranged first cooling plate and a plurality of vertically-arranged second cooling plates, the plurality of second cooling plates being successively arranged at intervals in the horizontal direction. Independent cooling liquid channels are provided in the first cooling plate and the second cooling plates. The first cooling plate is at least located on one side of the second cooling plates in the vertical direction, battery modules being located between every two adjacent second cooling plates. Two opposite side faces of each battery module are respectively cooled by means of the two second cooling plates adjacent thereto, and the top face and/or the bottom face of each battery module is cooled by means of the first cooling plate. Also provided in the present application are a battery pack and an electric vehicle.

## Description

### Technical Field

The present application relates to the field of battery technology, in particular to a battery cooling structure, a battery pack, and an electric vehicle.

### Description of Related Art

With the rapid development of new energy vehicles, the requirements for the safety, environmental protection, and space utilization of lithium batteries are also increasing. In order to meet the requirements of electric vehicle range, the energy density of individual batteries used in electric vehicles is also increasing, and the number of individual batteries is also increasing.

### BRIEF SUMMARY OF THE INVENTION

### Technical Problem

Due to the limited overall layout space of vehicles, the gaps between battery cells are reduced, resulting in a decrease in heat dissipation space. In order to maintain the temperature of the power battery within an appropriate range and ensure the safety and service life of the battery system, it is necessary to develop a more efficient liquid cooling system.

### Technical Solution

The object of the present application is to provide a battery cooling structure that not only has high cooling efficiency, but also allows battery modules to be separated by a first cooling plate to eliminate the thermal impact between adjacent battery modules, effectively controlling the thermal runaway and improving the safety performance of the battery pack.

The present application provides a battery cooling structure including a cooling plate assembly and battery modules, wherein the cooling plate assembly includes a horizontally-arranged first cooling plate and multiple vertically-arranged second cooling plates, the multiple second cooling plates are sequentially arranged at intervals along a horizontal direction, independent coolant channels are respectively provided inside the first cooling plate and the second cooling plates; the first cooling plate is located at least on one side of the second cooling plates along a vertical direction, each battery module is located between two adjacent second cooling plates, two opposite side surfaces of the battery module are cooled by the two adjacent second cooling plates, and the top surface and/or the bottom surface of the battery module are cooled by the first cooling plate.

In an achievable manner, the first cooling plate is located below the second cooling plates, the bottom ends of the second cooling plates are in contact with the top surface of the first cooling plate, and the bottom surfaces of the battery modules are in contact with the top surface of the first cooling plate.

In an achievable manner, the first cooling plate is provided with a coolant inlet and a coolant outlet, the second cooling plates are communicated with the first cooling plate through a coolant pipeline; an external coolant can enter the first cooling plate from the coolant inlet and then flow out from the coolant outlet after flowing through the coolant channel in the first cooling plate, the coolant pipeline, and the coolant channels in the second cooling plates, respectively.

In an achievable manner, a weak section is provided on the coolant pipeline, and the wall thickness of the weak section on the coolant pipeline is smaller than the wall thickness of other positions of the coolant pipeline; when the weak section is heated and melted, the external coolant can be sprayed out from the weak section on the coolant pipeline to cool down the battery module.

In an achievable manner, the coolant pipeline includes an inlet pipe and an outlet pipe, one end of the inlet pipe is communicated with the first cooling plate at a position adjacent to the coolant inlet, and the other end of the inlet pipe is simultaneously communicated with the inlet ports of the multiple second cooling plates; one end of the outlet pipe is communicated with the first cooling plate at a position adjacent to the coolant outlet, and the other end of the outlet pipe is simultaneously communicated with the outlet ports of the multiple second cooling plates.

In an achievable manner, the inlet port and the outlet port of the second cooling plate are respectively arranged at two opposite ends of the second cooling plate, and the inlet pipe and the outlet pipe are respectively arranged at the two opposite ends of the second cooling plate.

In an achievable manner, every two adjacent second cooling plates, the first cooling plate, the inlet pipe and the outlet pipe are enclosed to form an accommodating cavity, and the battery module is disposed in the accommodating cavity.

In an achievable manner, the inlet pipe includes multiple sequentially connected inlet branch pipes, each inlet branch pipe corresponds to a battery module, and two ends of each inlet branch pipe are respectively communicated with the inlet ports of adjacent two second cooling plates;

and/or, the outlet pipe includes multiple sequentially connected outlet branch pipes, each outlet branch pipe corresponds a battery module, and two ends of each outlet branch pipe are respectively communicated with the outlet ports of adjacent two second cooling plates.

In an achievable manner, a pipe quick connector is provided at the end of the inlet branch pipe and/or the end of the outlet branch pipe, and the pipe quick connector on the inlet branch pipe is fixed to the inlet port of the second cooling plate by inserting, and the pipe quick connector on the outlet branch pipe is fixed to the outlet port of the second cooling plate by inserting.

In an achievable manner, a weak section is provided on the inlet branch pipe and/or the outlet branch pipe, the wall thickness of the weak section on the inlet branch pipe is smaller than the wall thickness of other positions of the inlet branch pipe, and the wall thickness of the weak section on the outlet branch pipe is smaller than the wall thickness of other positions of the outlet branch pipe.

In an achievable manner, the wall thickness of the weak section on the inlet branch pipe is 1/3 to 2/3 of the wall thickness of other positions of the inlet branch pipe; and/or, the wall thickness of the weak section on the outlet branch pipe is 1/3 to 2/3 of the wall thickness of other positions of the outlet branch pipe.

In an achievable manner, the weak section on the inlet branch pipe is arranged at the middle position of the inlet branch pipe; and/or, the weak section on the outlet branch pipe is arranged at the middle position of the outlet branch pipe.

In an achievable manner, the inlet pipe further includes an inlet connecting pipe, one end of the inlet connecting pipe is communicated with the first cooling plate at a position adjacent to the coolant inlet, and the other end of the inlet connecting pipe is communicated with the inlet branch pipe;
and/or, the outlet pipe further includes an outlet connecting pipe, one end of the outlet connecting pipe is communicated with the first cooling plate at a position adjacent to the coolant outlet, and the other end of the outlet connecting pipe is communicated with the outlet branch pipe.

In an achievable manner, a first thermal conductive adhesive is provided between the surface of the first cooling plate and the top surface and/or the bottom surface of the battery module, and the first thermal conductive adhesive is provided on the surface of the first cooling plate, and/or the top surface and/or the bottom surface of the battery module;
and/or, a second thermal conductive adhesive is provided between the surface of the second cooling plate and the side surface of the battery module, and the second thermal conductive adhesive is provided on the surface of the second cooling plate and/or the side surface of the battery module.

In an achievable manner, among the multiple second cooling plates arranged at intervals, the second thermal conductive adhesive between the surfaces of the outermost two second cooling plates and the side surfaces of the battery modules is a thermal conductive structural adhesive.

In an achievable manner, the number of the second cooling plates is at least three, and the at least three second cooling plates are arranged at intervals along the horizontal direction; a battery module is provided between every two adjacent second cooling plates, and every two adjacent battery modules are separated by a second cooling plate.

The present application also provides a battery pack including the battery cooling structure as described above.

In an achievable manner, the battery pack further includes a battery box, the battery box includes a side plate, the side plate is connected to the first cooling plate, and the first cooling plate serves as a top plate and/or a bottom plate of the battery box.

In an achievable manner, the first cooling plate serves as the bottom plate of the battery box, the first cooling plate is located below the side plate, and the bottom of the side plate is connected to the first cooling plate.

The present application also provides an electric vehicle including the battery pack as described above.

### Beneficial Effects

The battery cooling structure provided in this application includes a first cooling plate and multiple second cooling plates. Each battery module is located between two adjacent second cooling plates, such that two opposite side surfaces of the battery module are cooled by the two adjacent second cooling plates, and the top surface and/or the bottom surface of the battery module are cooled by the first cooling plate, thus forming a structure for cooling at least three sides of the battery module, resulting in higher cooling efficiency and better cooling effect; further, the battery modules can be separated by the first cooling plate to eliminate the thermal impact between adjacent battery modules, thus effectively controlling the thermal runaway and improving the safety performance of the battery pack.

### BRIEF DESCRIPTION OF THE DRAWINGS

FIG. 1 is a structural schematic diagram of the battery pack in the embodiment of the present application.
FIG. 2 is a structural schematic diagram of the cooling plate assembly in FIG. 1.
FIG. 3 is a schematic diagram of the flow direction of the coolant in the embodiment of the present application.
FIG. 4 is a structural schematic diagram of the inlet branch pipe and the outlet branch pipe in the embodiment of the present application.
FIG. 5 is a schematic cross-sectional view of the weak section on the inlet branch pipe and the outlet branch pipe in FIG. 4.

In the figures, 1 - cooling plate assembly, 10 - accommodating cavity, 11 - first cooling plate, 111 - coolant inlet, 112 - coolant outlet, 12 - second cooling plate, 2 - battery module, 3 - coolant pipeline, 30 - weak section, 31 - inlet pipe, 311 - inlet branch pipe, 312 - inlet connecting pipe, 32 - outlet pipe, 321 - outlet branch pipe, 322 - outlet connecting pipe, 33 - pipe quick connector, 4 - side plate.

### DETAILED DESCRIPTION OF THE EMBODIMENTS

The following will provide a further detailed description of the specific implementations of the present application in conjunction with the accompanying drawings and embodiments. The following embodiments are used to illustrate the present application, but are not intended to limit the scope of the present application.

The terms "first", "second", "third", "fourth", etc. (if any) in the specification and claims of the present application are only used to distinguish similar objects, and are not intended to be used to describe a specific sequence or order.

The terms "up", "down", "left", "right", "front", "back", "top", "bottom" (if any) in the specification and claims of the present application are defined based on the position of the structure in the figures and the position between the structures in the figures, only for the clarity and convenience of expressing the technical solution. It should be understood that the use of these directional words should not limit the scope of protection in the present application.

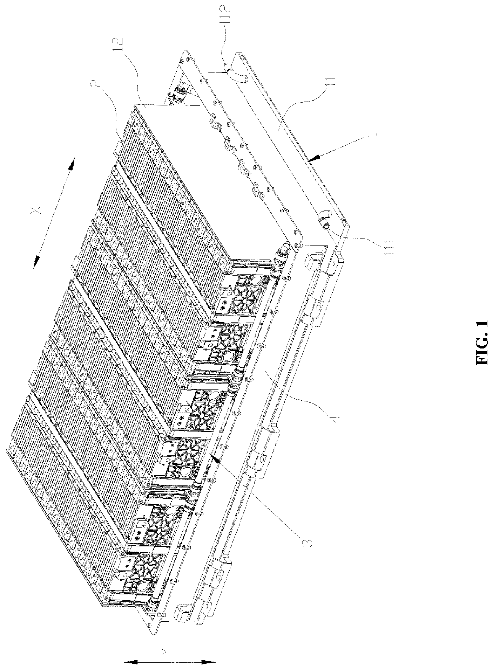

As shown in FIGS. 1 to 3, the battery cooling structure provided in this embodiment of the present application includes a cooling plate assembly 1 and battery modules 2. The cooling plate assembly 1 includes a horizontally-arranged first cooling plate 11 and multiple vertically-arranged second cooling plates 12. The multiple second cooling plates 12 are sequentially arranged at intervals along a horizontal direction X. Independent coolant channels are respectively provided inside the first cooling plate 11 and the second cooling plates 12. The first cooling plate 11 is located at least on one side of the second cooling plates 12 along a vertical direction Y. Each battery module 2 is located between two adjacent second cooling plates 12, two opposite side surfaces of the battery module 2 are cooled by the two adjacent second cooling plates 12, and the top surface and/or the bottom surface of the battery module 2 are cooled by the first cooling plate 11.

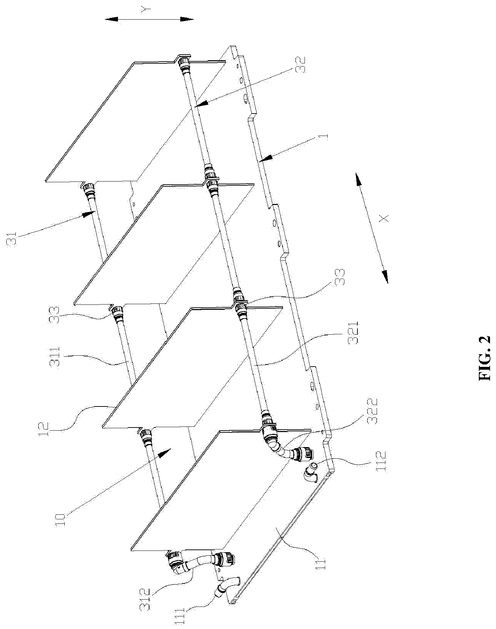

As shown in FIGS. 1 and 2, as one embodiment, the number of the second cooling plates 12 is at least three, and the at least three second cooling plates 12 are arranged at intervals along the horizontal direction X; a battery module 2 is provided between every two adjacent second cooling plates 12, and every two adjacent battery modules 2 are separated by a second cooling plate 12.

Specifically, the battery cooling structure provided in this embodiment of the present application includes a first cooling plate 11 and multiple second cooling plates 12. Each battery module 2 is located between two adjacent second cooling plates 12, such that two opposite side surfaces of the battery module 2 are cooled by the two adjacent second cooling plates 12, and the top surface and/or the bottom surface of the battery module 2 are cooled by the first cooling plate 11, thus forming a structure for cooling at least three sides of the battery module 2, resulting in higher cooling efficiency and better cooling effect; further, the battery modules 2 can be separated by the first cooling plate 11 to eliminate the thermal impact between adjacent battery modules 2, thus effectively controlling the thermal runaway and improving the safety performance of the battery pack.

As shown in FIGS. 1 and 2, as one embodiment, the first cooling plate 11 is located below the second cooling plates 12, the bottom ends of the second cooling plates 12 are in contact with the top surface of the first cooling plate 11, and the bottom surfaces of the battery modules 2 are in contact with the top surface of the first cooling plate 11. Of course, in other embodiments, the first cooling plate 11 can also be located above the second cooling plates 12, such that the top ends of the second cooling plates 12 are in contact with the bottom surface of the first cooling plate 11, and the top surfaces of the battery modules 2 are in contact with the bottom surface of the first cooling plate 11. Of course, the first cooling plate 11 can also be simultaneously located above and below the second cooling plates 12 to form a structure for cooling four sides of the battery module 2.

As shown in FIGS. 1 and 2, as one embodiment, the first cooling plate 11 and the second cooling plates 12 are rectangular structures, and the multiple second cooling plates 12 are arranged at intervals along the length direction of the first cooling plate 11 (i.e., the horizontal direction X in the figures is the length direction of the first cooling plate 11).

As shown in FIGS. 1 and 2, as one embodiment, the first cooling plate 11 is provided with a coolant inlet 111 and a coolant outlet 112, which are arranged on the same side of the first cooling plate 11 along its length direction. The second cooling plates 12 are communicated with the first cooling plate 11 through a coolant pipeline 3. An external coolant can enter the first cooling plate 11 from the coolant inlet 111 and then flow out from the coolant outlet 112 after flowing through the coolant channel in the first cooling plate 11, the coolant pipeline 3, and the coolant channels in the second cooling plates 12, respectively.

As shown in FIG. 2, as one embodiment, the coolant pipeline 3 includes an inlet pipe 31 and an outlet pipe 32. One end of the inlet pipe 31 is communicated with the first cooling plate 11 at a position adjacent to the coolant inlet 111, and the other end of the inlet pipe 31 is simultaneously communicated with inlet ports of the multiple second cooling plates 12. One end of the outlet pipe 32 is communicated with the first cooling plate 11 at a position adjacent to the coolant outlet 112, and the other end of the outlet pipe 32 is simultaneously communicated with outlet ports of the multiple second cooling plates 12.

As shown in FIG. 2, as one embodiment, the inlet port and the outlet port of the second cooling plate 12 are respectively arranged at two opposite ends of the second cooling plate 12, and the inlet pipe 31 and the outlet pipe 32 are respectively arranged at the two opposite ends of the second cooling plate 12.

As shown in FIGS. 1 and 2, as one embodiment, every two adjacent second cooling plates 12, the first cooling plate 11, the inlet pipe 31 and the outlet pipe 32 are enclosed to form an accommodating cavity 10, and the battery module 2 is disposed in the accommodating cavity 10.

Specifically, by arranging the inlet pipe 31 and the outlet pipe 32 on opposite sides of the second cooling plate 12, it is possible to ensure that the center of gravity of the entire battery cooling structure is in its central position, prevent the center of gravity of the module from shifting, and enable the coolant to enter the second cooling plate 12 from one side of the battery module 2 and then flow out of the second cooling plate 12 from the other side of the battery module 2, thereby achieving good cooling and heat dissipation effects. Meanwhile, the accommodating cavity 10 formed by the enclosure between the second cooling plates 12, the first cooling plate 11, the inlet pipe 31 and the outlet pipe 32 can ensure that the position of the battery module 2 does not shift, preventing relative sliding between the battery module 2 and the cooling plates.

As shown in FIG. 2, as one embodiment, the inlet pipe 31 includes multiple sequentially connected inlet branch pipes 311, which extend along the horizontal direction X. Each inlet branch pipe 311 corresponds to a battery module 2 (i.e., each inlet branch pipe 311 is located between adjacent two second cooling plates 12), and two ends of each inlet branch pipe 311 are respectively communicated with the inlet ports of the adjacent two second cooling plates 12, thereby forming a three-way structure at the connection position between the inlet branch pipe 311 and the second cooling plate 12 (i.e., the inlet port of the second cooling plate 12 is simultaneously communicated with the coolant channel inside the second cooling plate 12 and two inlet branch pipes 311 on both sides of the second cooling plate 12).

The outlet pipe 32 includes multiple sequentially connected outlet branch pipes 321, which extend along the horizontal direction X. Each outlet branch pipe 321 corresponds to a battery module 2 (i.e., each outlet branch pipe 321 is located between adjacent two second cooling plates 12), and two ends of each outlet branch pipe 321 are respectively communicated with the outlet ports of the adjacent two second cooling plates 12, thereby forming a three-way structure at the connection position between the outlet branch pipe 321 and the second cooling plate 12 (i.e., the outlet port of the second cooling plate 12 is simultaneously communicated with the coolant channel inside the second cooling plate 12 and two outlet branch pipes 321 on both sides of the second cooling plate 12).

As shown in FIG. 2, as one embodiment, both ends of the inlet branch pipe 311 and both ends of the outlet branch pipe 321 are provided with pipe quick connectors 33. The pipe quick connector 33 on the inlet branch pipe 311 is fixed to the inlet port of the second cooling plate 12 by inserting, and the pipe quick connector 33 on the outlet branch pipe 321 are fixed to the outlet port of the second cooling plate 12 by inserting, facilitating the maintenance, replacement, and installation of the inlet branch pipe 311 and the outlet branch pipe 321.

As shown in FIGS. 2, 4, and 5, as one embodiment, the coolant pipeline 3 can be corrugated pipe, hose, etc. A weak section 30 is provided on the coolant pipeline 3, and the wall thickness of the weak section 30 on the coolant pipeline 3 is smaller than the wall thickness of other positions of the coolant pipeline 3. After the weak section 30 is melted by heat, the external coolant can be sprayed out from the weak section 30 on the coolant pipeline 3 to cool down the battery module 2.

Specifically, by setting the weak section 30 on the coolant pipeline 3, that is, forming an explosive structure on the coolant pipeline 3, when a battery module 2 experiences thermal runaway and the temperature of the coolant pipeline 3 reaches its melting point (for example, when the coolant pipeline 3 is made of PA12 (Polydodecylamine) material, which has a melting point of 172-178°C), the weak section 30 on the coolant pipeline 3 first melts and breaks open due to the thin wall thickness, causing the coolant in the coolant pipeline 3 to spray out from the weak section 30 to cool down the battery module 2, and the coolant can quickly immerse the battery module 2, thereby effectively controlling thermal runaway and improving the safety performance of the battery pack.

As shown in FIGS. 2, 4, and 5, as one embodiment, at least one weak section 30 is provided on both the inlet branch pipe 311 and the outlet branch pipe 321. The wall thickness of the weak section 30 on the inlet branch pipe 311 is smaller than the wall thickness of other positions of the inlet branch pipe 311, and the wall thickness of the weak section 30 on the outlet branch pipe 321 is smaller than the wall thickness of other positions of the outlet branch pipe 321. By providing the weak sections 30 on the inlet branch pipe 311 and the outlet branch pipe 321, when a certain battery module 2 experiences thermal runaway, the weak sections 30 on the corresponding inlet branch pipe 311 and outlet branch pipe 321 will first melt and break open, thus allowing the coolant to spray out onto the battery module 2 that has experienced thermal runaway, thereby improving cooling efficiency.

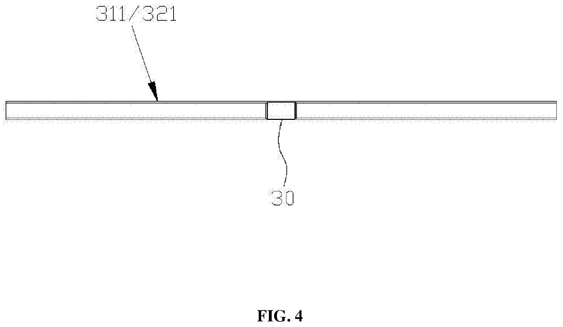

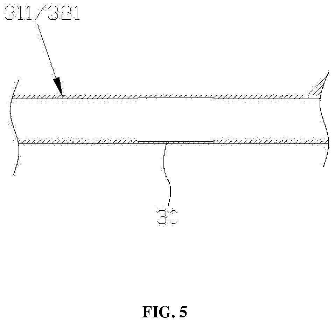

As shown in FIGS. 4 and 5, as one embodiment, the wall thickness of the weak section 30 on the inlet branch pipe 311 is 1/5-2/5, or 1/3-2/3, or 1/2 of the wall thickness of other positions of the inlet branch pipe 311. The wall thickness of the weak section 30 on the outlet branch pipe 321 is 1/5-2/5, or 1/3-2/3, or 1/2 of the wall thickness of other positions of the outlet branch pipe 321.

As shown in FIGS. 4 and 5, as one embodiment, the weak section 30 on the inlet branch pipe 311 is arranged at the middle position of the inlet branch pipe 311, and the weak section 30 on the outlet branch pipe 321 is arranged at the middle position of the outlet branch pipe 321, so as to ensure that the weak section 30 has a larger cooling area for the battery module 2 when it breaks open, thereby improving the cooling effect.

As shown in FIG. 2, as one embodiment, the inlet pipe 31 further includes an inlet connecting pipe 312, which is vertically arranged. One end of the inlet connecting pipe 312 is communicated with the first cooling plate 11 at a position adjacent to the coolant inlet 111, and the other end of the inlet connecting pipe 312 is communicated with the inlet branch pipe 311.

The outlet pipe 32 further includes an outlet connecting pipe 322, which is vertically arranged. One end of the outlet connecting pipe 322 is communicated with the first cooling plate 11 at a position adjacent to the coolant outlet 112, and the other end of the outlet connecting pipe 322 is communicated with the outlet branch pipe 321.

As one embodiment, the first cooling plate 11 and the second cooling plate 12 are connected with the battery module 2 through thermal conductive adhesive to achieve mechanical connection with the battery module 2 and heat dissipation effect of the battery module 2 (of course, in other embodiments, the first cooling plate 11 and the second cooling plate 12 can also be in direct contact with the battery module 2 for heat dissipation). Specifically, a first thermal conductive adhesive (not shown) is provided between the surface of the first cooling plate 11 and the top surface and/or the bottom surface of the battery module 2. The first thermal conductive adhesive is provided on the surface of the first cooling plate 11, and/or the top surface and/or the bottom surface of the battery module 2.

A second thermal conductive adhesive (not shown) is provided between the surface of the second cooling plate 12 and the side surface of the battery module 2. The second thermal conductive adhesive is provided on the surface of the second cooling plate 12 and/or the side surface of the battery module 2.

As shown in FIGS. 1 and 2, as one embodiment, the second thermal conductive adhesive provided between the surfaces of the outermost two second cooling plates 12 and the side surfaces of the battery modules 2 is a thermal conductive structural adhesive.

Specifically, since only one side of the first and last second cooling plates 12 is connected to the battery module 2, it needs to be connected through a thermal conductive structural adhesive. The thermal conductive structural adhesive is firmly connected and not easy to loosen, which can prevent the first and last second cooling plates 12 from loosening from the battery module 2 during vehicle driving. However, the remaining second cooling plates 12 located in the middle can be thermally conductive with the battery module 2 through ordinary thermal conductive adhesive, which facilitates the disassembly of the battery modules 2. It is noted that each of the second cooling plates 12 located in the middle has two sides connected to the battery module 2 and is sandwiched between the battery modules 2, so it is not easy to loosen. The model of the first thermal conductive adhesive can be FP-800 K30 LD, the model of the second thermal conductive adhesive provided between the surfaces of the outermost two second cooling plate 12 and the side surfaces of the battery modules 2 can be TSA-3000 K20, and the model of the second thermal conductive adhesive provided between the surfaces of the second cooling plates 12 located in the middle and the side surfaces of the battery modules 2 can be FP-800 K30 LD.

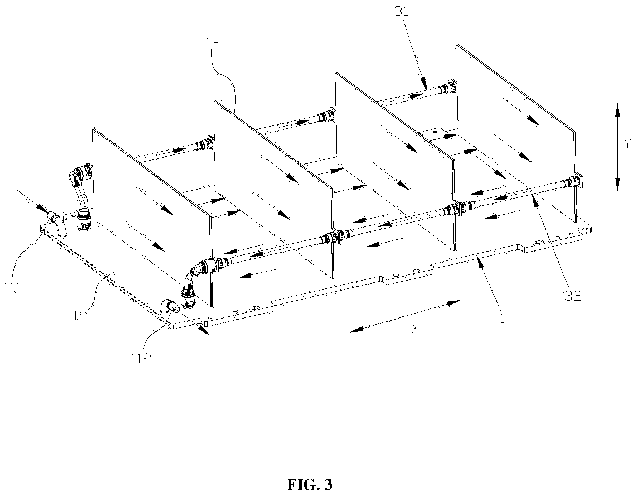

As shown in FIGS. 1 and 3, the flow direction of the coolant in this embodiment is as follows: the coolant flows into the first cooling plate 11 from the coolant inlet 111 on the first cooling plate 11, and then divides into two paths. The coolant in one path flows through the coolant channel in the first cooling plate 11 and then flows out from the coolant outlet 112 (in FIG. 3, the flow direction of the coolant in the first cooling plate 11 is indicated by solid arrows) to cool down the bottom surfaces of the battery modules 2; the coolant in the other path sequentially flows through the inlet pipe 31, the coolant channels in the multiple second cooling plate 12, and the outlet pipe 32, and then flows out from the coolant outlet 112 (in FIG. 3, the flow direction of the coolant in the inlet pipe 31, the second cooling plates 12, and the outlet pipe 32 is indicated by dashed arrows) to cool down the side surfaces of the battery modules 2. When a battery module 2 experiences thermal runaway, the flow rate of the coolant in the cooling plates increases to rapidly cool down the battery modules 2; when the temperature is too high, the weak section 30 on the coolant pipeline 3 automatically melts and breaks open, and the coolant sprays out from the weak section 30 to cool down the battery module 2, thereby reducing the risk of thermal runaway spreading and improving the safety performance of the battery pack.

As shown in FIG. 1, the embodiment of the present application also provides a battery pack including the battery cooling structure as described above.

As shown in FIG. 1, as one embodiment, the battery pack further includes a battery box, the battery box includes a side plate 4, and the side plate 4 is connected to the first cooling plate 11. The first cooling plate 11 serves as a top plate and/or a bottom plate of the battery box.

As shown in FIG. 1, as one embodiment, the first cooling plate 11 serves as the bottom plate of the battery box, and the first cooling plate 11 is located below the side plate 4. The bottom of the side plate 4 is connected to the first cooling plate 11. Of course, in other embodiments, the first cooling plate 11 can also serve as the top plate of the battery box, or the number of the first cooling plate 11 can be two, with the two first cooling plates 11 serving as the top and bottom plates of the battery box.

As one embodiment, the side plate 4 is connected to the first cooling plate 11 by bolts, and the battery module 2 is fixed inside the battery box by bolts.

The embodiment of the present application also provides an electric vehicle including the battery pack as described above.

The battery cooling structure provided in this embodiment of the present application includes a first cooling plate 11 and multiple second cooling plates 12. Each battery module 2 is located between two adjacent second cooling plates 12, such that two opposite side surfaces of the battery module 2 are cooled by the two adjacent second cooling plates 12, and the top surface and/or the bottom surface of the battery module 2 are cooled by the first cooling plate 11, thus forming a structure for cooling at least three sides of the battery module 2, resulting in higher cooling efficiency and better cooling effect; further, the battery modules 2 can be separated by the first cooling plate 11 to eliminate the thermal impact between adjacent battery modules 2, thus effectively controlling the thermal runaway and improving the safety performance of the battery pack.

The above are only the specific embodiments of the present application, but the scope of protection of the present application is not limited to this. Any technical personnel familiar with this technical field who can easily think of changes or replacements within the scope of technology disclosed in the present application should be covered within the scope of protection of the present application. Therefore, the protection scope of the present application should be based on the protection scope of the claims.

## Claims

1. A battery cooling structure comprising a cooling plate assembly (1) and battery modules (2), wherein the cooling plate assembly (1) comprises a horizontally-arranged first cooling plate (11) and multiple vertically-arranged second cooling plates (12), the multiple second cooling plates (12) are sequentially arranged at intervals along a horizontal direction (X), independent coolant channels are respectively provided inside the first cooling plate (11) and the second cooling plates (12); the first cooling plate (11) is located at least on one side of the second cooling plates (12) along a vertical direction (Y), each battery module (2) is located between two adjacent second cooling plates (12), two opposite side surfaces of the battery module (2) are cooled by the two adjacent second cooling plates (12), and the top surface and/or the bottom surface of the battery module (2) are cooled by the first cooling plate (11).

2. The battery cooling structure as claimed in claim **1,** wherein the first cooling plate (11) is located below the second cooling plates (12), the bottom ends of the second cooling plates (12) are in contact with the top surface of the first cooling plate (11), and the bottom surfaces of the battery modules (2) are in contact with the top surface of the first cooling plate (11).

3. The battery cooling structure as claimed in claim **1,** wherein the first cooling plate (11) is provided with a coolant inlet (111) and a coolant outlet (112), the second cooling plates (12) are communicated with the first cooling plate (11) through a coolant pipeline (3); an external coolant can enter the first cooling plate (11) from the coolant inlet (111) and then flow out from the coolant outlet (112) after flowing through the coolant channel in the first cooling plate (11), the coolant pipeline (3), and the coolant channels in the second cooling plates (12), respectively.

4. The battery cooling structure as claimed in claim **3,** wherein a weak section (30) is provided on the coolant pipeline (3), and the wall thickness of the weak section (30) on the coolant pipeline (3) is smaller than the wall thickness of other positions of the coolant pipeline (3); when the weak section (30) is heated and melted, the external coolant can be sprayed out from the weak section (30) on the coolant pipeline (3) to cool down the battery module (2).

5. The battery cooling structure as claimed in claim 3, wherein the coolant pipeline (3) comprises an inlet pipe (31) and an outlet pipe (32), one end of the inlet pipe (31) is communicated with the first cooling plate (11) at a position adjacent to the coolant inlet (111), and the other end of the inlet pipe (31) is simultaneously communicated with the inlet ports of the multiple second cooling plates (12); one end of the outlet pipe (32) is communicated with the first cooling plate (11) at a position adjacent to the coolant outlet (112), and the other end of the outlet pipe (32) is simultaneously communicated with the outlet ports of the multiple second cooling plates (12).

6. The battery cooling structure as claimed in claim 5, wherein the inlet port and the outlet port of the second cooling plate (12) are respectively arranged at two opposite ends of the second cooling plate (12), and the inlet pipe (31) and the outlet pipe (32) are respectively arranged at the two opposite ends of the second cooling plate (12).

7. The battery cooling structure as claimed in claim 6, wherein every two adjacent second cooling plates (12), the first cooling plate (11), the inlet pipe (31) and the outlet pipe (32) are enclosed to form an accommodating cavity (10), and the battery module (2) is disposed in the accommodating cavity (10).

8. The battery cooling structure as claimed in claim 5, wherein the inlet pipe (31) comprises multiple sequentially connected inlet branch pipes (311), each inlet branch pipe (311) corresponds to a battery module (2), and two ends of each inlet branch pipe (311) are respectively communicated with the inlet ports of adjacent two second cooling plates (12);
and/or, the outlet pipe (32) comprises multiple sequentially connected outlet branch pipes (321), each outlet branch pipe (321) corresponds a battery module (2), and two ends of each outlet branch pipe (321) are respectively communicated with the outlet ports of adjacent two second cooling plates (12).

9. The battery cooling structure as claimed in claim 8, wherein a pipe quick connector (33) is provided at the end of the inlet branch pipe (311) and/or the end of the outlet branch pipe (321), and the pipe quick connector (33) on the inlet branch pipe (311) is fixed to the inlet port of the second cooling plate (12) by inserting, and the pipe quick connector (33) on the outlet branch pipe (321) is fixed to the outlet port of the second cooling plate (12) by inserting.

10. The battery cooling structure as claimed in claim **8,** wherein a weak section (30) is provided on the inlet branch pipe (311) and/or the outlet branch pipe (321), the wall thickness of the weak section (30) on the inlet branch pipe (311) is smaller than the wall thickness of other positions of the inlet branch pipe (311), and the wall thickness of the weak section (30) on the outlet branch pipe (321) is smaller than the wall thickness of other positions of the outlet branch pipe (321).

11. The battery cooling structure as claimed in claim **10,** wherein the wall thickness of the weak section (30) on the inlet branch pipe (311) is 1/3 to 2/3 of the wall thickness of other positions of the inlet branch pipe (311); and/or, the wall thickness of the weak section (30) on the outlet branch pipe (321) is 1/3 to 2/3 of the wall thickness of other positions of the outlet branch pipe (321).

12. The battery cooling structure as claimed in claim **10,** wherein the weak section (30) on the inlet branch pipe (311) is arranged at the middle position of the inlet branch pipe (311); and/or, the weak section (30) on the outlet branch pipe (321) is arranged at the middle position of the outlet branch pipe (321).

13. The battery cooling structure as claimed in claim **8,** wherein the inlet pipe (31) further comprises an inlet connecting pipe (312), one end of the inlet connecting pipe (312) is communicated with the first cooling plate (11) at a position adjacent to the coolant inlet (111), and the other end of the inlet connecting pipe (312) is communicated with the inlet branch pipe (311);
and/or, the outlet pipe (32) further comprises an outlet connecting pipe (322), one end of the outlet connecting pipe (322) is communicated with the first cooling plate (11) at a position adjacent to the coolant outlet (112), and the other end of the outlet connecting pipe (322) is communicated with the outlet branch pipe (321).

14. The battery cooling structure as claimed in claim **1,** wherein a first thermal conductive adhesive is provided between the surface of the first cooling plate (11) and the top surface and/or the bottom surface of the battery module (2);
and/or, a second thermal conductive adhesive is provided between the surface of the second cooling plate (12) and the side surface of the battery module (2).

15. The battery cooling structure as claimed in claim **14,** wherein among the multiple second cooling plates (12) arranged at intervals, the second thermal conductive adhesive between the surfaces of the outermost two second cooling plates (12) and the side surfaces of the battery modules (2) is a thermal conductive structural adhesive.

16. The battery cooling structure as claimed in any one of claims **1** to **15,** wherein the number of the second cooling plates (12) is at least three, and the at least three second cooling plates (12) are arranged at intervals along the horizontal direction (X); a battery module (2) is provided between every two adjacent second cooling plates (12), and every two adjacent battery modules (2) are separated by a second cooling plate (12).

17. A battery pack comprising the battery cooling structure as claimed in any one of claims **1** to **16.**

18. The battery pack as claimed in claim **17,** wherein the battery pack further comprises a battery box, the battery box comprises a side plate (4), the side plate (4) is connected to the first cooling plate (11), and the first cooling plate (11) serves as a top plate and/or a bottom plate of the battery box.

19. The battery pack as claimed in claim **18,** wherein the first cooling plate (11) serves as the bottom plate of the battery box, the first cooling plate (11) is located below the side plate (4), and the bottom of the side plate (4) is connected to the first cooling plate (11).

20. An electric vehicle comprising the battery pack as claimed in any one of claims **17** to **19.**
